# EUROPEAN PATENT APPLICATION

(11) **EP 4 811 500 A1**
(43) Date of publication of application: **23.09.2026**
(21) Application number: 26165147.5
(22) Date of filing: 16.03.2026
(51) Int. Cl.: H01M 10/658

(54) **COMPOSITE PAD FOR BATTERIES**

(30) Priority: 21.03.2025 KR 20250036644
(71) Applicant: Innox Advanced Materials CO., Ltd., Asan-si, Chungchongnam-do 31409 (KR)
(72) Inventor: YU, Hong Jeong, 31409 Asan-si, Chungcheongnam-do (KR); YOO, Sung Ju, 31409 Asan-si, Chungcheongnam-do (KR); KWON, Ki Dae, 31409 Asan-si, Chungcheongnam-do (KR); NA, Sang Woo, 31409 Asan-si, Chungcheongnam-do (KR); PARK, Hyun Kyoo, 31409 Asan-si, Chungcheongnam-do (KR)
(74) Representative: Cabinet Beau de Loménie

(57) **Abstract**

A composite pad for batteries is disclosed. The composite pad for batteries can ensure improved structural stability of battery modules and battery packs by ensuring excellent surface pressure characteristics, can exhibit improved fireproof and thermal insulation characteristics to prevent rapid temperature rise of battery cells, and can prevent fire generation while minimizing damage by suppressing thermal runaway propagation to adjacent battery cells upon thermal runaway of a certain battery cell.

## Description

### TECHNICAL FIELD

The present invention relates to a composite pad for batteries.

### BACKGROUND

Secondary batteries are capable of repeated charging and discharging and can be applied to various fields, such as mobile devices, electric vehicles (EVs), hybrid vehicles (HEVs), energy storage systems (ESSs), and the like. As such, with the continuous development of technology, models with more compact and capable of delivering higher power output are being developed in the art.

Typically, a secondary battery includes a plurality of battery cells electrically connected to each other by busbars to form a single battery module. Such a secondary battery is subject to swelling due to electrode expansion and degradation during charge/discharge cycling. The resulting volume change in the battery cell can lead to structural changes within the cells, which can impair battery performance and stability. In addition, the expanding volume of some battery cells in the battery module can disrupt arrangement of other battery cells therearound, causing damage to the battery module. Therefore, measures for improving structural stability of the battery module by buffering the volume change caused by charging/discharging and swelling of the battery cells are being continuously researched.

On the other hand, secondary batteries generate heat due to electrochemical reactions during the charging/discharging process. Moreover, a large amount of heat can be generated due to various causes, such as overcurrent, overcharging, over-discharging, high temperature exposure, external shock beyond certain levels, and the like. Since the battery module includes a number of densely-packed battery cells, the battery module can undergo thermal runaway resulting from localized heat buildup. Battery cell fires are difficult to extinguish with typical fire extinguishment methods including fire blankets, fire extinguishers, and the like, and only the cooling method, which extinguishes battery cell fires by lowering the internal temperature of the battery cells, is known to be effective. As such, it remains difficult to completely prevent battery cell fires. Therefore, there is a need for a system capable of suppressing battery cell fires at an early stage to prevent thermal runaway propagation to the entire battery module or vehicle.

### SUMMARY

Embodiments of the present invention have been conceived to solve such problems in the art and it is one aspect of the present invention to provide a composite pad for batteries that has characteristics of a surface pressure pad relieving a volume change of a battery cell while exhibiting improved fire resistance and thermal insulation characteristics.

It is another aspect of the present invention to provide a composite pad for batteries that can prevent fire generation by suppressing propagation to adjacent batteries upon thermal runaway of a battery cell.

It is a further aspect of the present invention to provide a composite pad for batteries that can improve structural stability of a battery module by relieving volume changes due to charging/discharging and swelling of battery cells.

However, it should be understood that aspects of the present invention are not limited to those described above. The above and other aspects of the present invention will become apparent to those skilled in the art from the detailed description of the following embodiments in conjunction with the accompanying drawings.

In accordance with one aspect of the present invention, there is provided a composite pad for batteries, including a silicone foam having surface pressure characteristics, wherein the silicone foam has an average pore diameter of 100 µm to 2,000 µm and includes silica aerogel particles subjected to hydrophobic surface treatment, the silica aerogel particles having an average particle diameter (D50) of 5 µm to 50 µm and a specific surface area (BET) of 250 m²/g or more.

The composite pad for batteries may further include a refractory layer.

The silicone foam may have a thickness of 1 mm to 5 mm.

The silicone foam may include a cured foam product of a silicone foam-forming composition.

The silicone foam-forming composition may include a siloxane resin composition.

The refractory layer may include at least one selected from the group consisting of mica, silica-based fiber, glass fiber, and carbon fiber.

The composite pad for batteries may further include an adhesive layer between the refractory layer and the silicone foam.

The silicone foam may have a tensile strength of 200 kPa or more, as measured by the ASTM D412 method.

The composite pad for batteries according to embodiments of the invention can enhance structural stability of battery modules and battery packs by ensuring excellent surface pressure characteristics to relieve volume changes of battery cells, can exhibit improved fireproof and thermal insulation characteristics to prevent rapid temperature rise of battery cells, and can prevent fire generation while minimizing damage by suppressing thermal runaway propagation to adjacent battery cells upon thermal runaway of a certain battery cell.

Furthermore, the composite pad for batteries according to the embodiments of the invention can be effectively applied to manufacture of battery modules and battery packs including a plurality of battery cells.

### BRIEF DESCRIPTION OF DRAWINGS

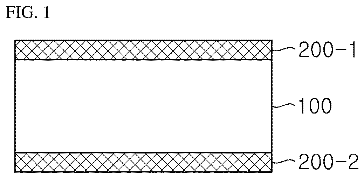

FIG. 1 is a view of a laminate structure of a composite pad for batteries according to one embodiment of the present invention.

### DETAILED DESCRIPTION

Unless defined otherwise herein, all terms (including technical and scientific terms) have the same meaning as commonly understood by one of ordinary skill in the art to which this disclosure pertains. Terms, such as those defined in commonly used dictionaries, should be interpreted as having a meaning that is consistent with their meaning in the context of the related art and should not be interpreted in an idealized or overly formal sense, unless clearly defined herein.

In addition, as used herein, the terms "comprises," "comprising," "includes," and/or "including" specify the presence of stated elements and/or steps, but do not preclude the presence or addition of at least one other element and/or step.

In addition, the singular forms "a," "an" and "the" are intended to include the plural forms as well, unless context clearly indicates otherwise. For example, as used herein, "refractory layer" may refer to at least one of a first refractory layer and a second refractory layer.

In addition, spatially relative terms, such as "under," "lower surface," "below," "on," "upper surface," "above," and the like, may be used herein for descriptive purposes, and, thereby, to describe one element's relationship to other element(s) as illustrated in the drawings. Spatially relative terms are intended to encompass different orientations of an apparatus in use, operation, and/or manufacture in addition to the orientation depicted in the drawings. For example, if the laminate structure in the drawings is turned over, elements described as "under" or "below" other elements or features would then be placed "on" or "above" the other elements or features. Thus, the exemplary term "under" or "below" can encompass both an orientation of above and below.

### <Composite pad for batteries>

The present invention relates to a composite pad for batteries including a silicone foam having surface pressure characteristics, specifically a composite pad for batteries including a silicone foam having surface pressure characteristics, wherein the silicone foam has an average pore diameter of 100 µm to 2,000 µm and includes silica aerogel particles subjected to hydrophobic surface treatment, the silica aerogel particles having an average particle diameter (D50) of 5 µm to 50 µm and a specific surface area (BET) of 250 m²/g or more.

### Silicone foam

The composite pad for batteries according to the present invention includes silicone foam. The silicone foam has spherical pores. Here, the spherical pores may not be strictly spherical. For example, the spherical pores may be partially deformed spherical pores or significantly deformed spherical pores.

The silicone foam may have an average pore diameter of 100 µm to 2,000 µm, preferably 100 µm to 1,000 µm, more preferably 150 µm to 800 µm. This range of the average pore diameter allows easy control of the average pore diameter of the silicone foam, can achieve uniform improvement of fire resistance and heat resistance of the silicone foam by ensuring good dispersion and distribution of the silica aerogel particles described below within the pores, and can provide a silicone foam having high tensile strength.

In one embodiment, the silicone foam may have a thickness of 1 mm to 5 mm, preferably 2 mm to 4 mm. Within this range of the thickness, the silicone foam can be suitably used for manufacture of battery modules and battery packs while ensuring excellent surface pressure and fire resistance characteristics.

The silicone foam includes silica aerogel particles. That is, the silicone foam according to the present invention is a hybrid silicone foam including silica aerogel particles.

The silica aerogel particles are composed of silicon dioxide (SiO₂) having a network of interconnected nanostructures with a very high porosity.

The silica aerogel particles may have an average particle diameter (D50) of 5 µm to 50 µm, preferably 7 µm to 45 µm, more preferably 9 µm to 40 µm. In addition, the silica aerogel particles may have a specific surface area (BET) of 250 m²/g or more, preferably 300 m²/g or more, more preferably 300 m²/g to 1,000 m²/g.

In the hybrid silicone foam including the silica aerogel particles, there can be a problem that poor compatibility between the silica aerogel particles and the silicone foam can reduce tensile strength of the silicone foam, thereby causing deterioration in strength and surface pressure characteristics of the composite pad for batteries. According to the present invention, experimental results show that controlling the average particle diameter (D50) and specific surface area (BET) of the silica aerogel particles within the above ranges can enhance compatibility with the silicone foam, thereby achieving desirable effects on both foaming reaction and pore formation of the silicone foam. It is believed that a gas generated in the foaming reaction of silicone is formed around the surface of silica aerogel particles, whereby the pores in the silicone foam and the silica aerogel particles can coexist by controlling the average particle diameter and specific surface area of the silica aerogel particles. Accordingly, it is possible to achieve high tensile strength while improving the fire resistance and heat resistance of the silicone foam.

In one embodiment, the hybrid silicone foam including the silica aerogel particles satisfying the average particle diameter (D50) and the specific surface area (BET) described above may have a tensile strength of 200 kPa or more, preferably 205 kPa or more, more preferably 210 kPa or more, still more preferably 218 kPa or more, as measured by the ASTM D412 method.

The silica aerogel particles are subjected to hydrophobic surface treatment. If the silica aerogel particles added to the silicone foam have different surface properties than the silicone foam, there can be a problem that the silica aerogel particles are unevenly dispersed in the silicone foam and agglomerate together. Therefore, in order to match the surface properties of the silica aerogel particles with the silicone foam, the silica aerogel particles may be subjected to surface treatment with a hydrophobic surface treatment agent, whereby the silicone foam can form uniform pores, thereby further improving the surface pressure characteristics and tensile strength.

The hydrophobic surface treatment agent for surface treatment of the silica aerogel particles may include alkyl alkoxysilane compounds, such as dimethyldimethoxysilane, diethyldiethoxysilane, trimethylmethoxysilane, trimethylethoxysilane, methyltrimethoxysilane, methyltriethoxysilane, butyltrimethoxysilane, and the like; alkyl disiloxane compounds, such as hexamethyldisiloxane and the like; alkyl silazane compounds, such as hexamethyldisilazane and the like; and chlorosilane compounds, such as dimethyldichlorosilane and trimethylchlorosilane, without being limited thereto.

In one embodiment, the silicone foam may include a cured foam product of a silicone foam-forming composition.

The silicone foam-forming composition may include the silica aerogel particles and a siloxane resin composition described above.

The silica aerogel particles may be present in an amount of 1 wt% to 20 wt%, preferably 5 wt% to 18 wt%, more preferably 8 wt% to 15 wt%, based on the total weight of the silicone foam-forming composition.

The siloxane resin composition may include at least one selected from the group consisting of a vinyl terminated polysiloxane, a hydroxy terminated polysiloxane, a hydrogen-containing polysiloxane, and an MQ silicone resin. The siloxane resin composition may include a vinyl terminated polysiloxane, a hydroxy terminated polysiloxane, a hydrogen-containing polysiloxane, and an MQ silicone resin.

The siloxane resin composition may be present in an amount of 50 wt% to 95 wt%, preferably 60 wt% to 85 wt%, based on the total weight of the silicone foam-forming composition.

The vinyl terminated polysiloxane may include at least one selected from the group consisting of, for example, a vinyl terminated polydimethylsiloxane, a vinyl terminated polydiethylsiloxane, a vinyl terminated polymethylvinylsiloxane, a vinyl terminated polyphenylmethylsiloxane, a vinyl terminated diphenylsiloxane-dimethylsiloxane copolymer, a vinyl terminated dimethylsiloxane-methylvinylsiloxane copolymer, a vinyl terminated dimethylsiloxane-methylphenylsiloxane copolymer, a vinyl terminated diethylsiloxane-dimethylsiloxane copolymer, and a vinyl terminated polydiphenylsiloxane, without being limited thereto.

The siloxane resin composition may include two or more types of vinyl terminated polysiloxane, preferably two or more types of vinyl terminated polysiloxane having different viscosities, more preferably a high viscosity vinyl terminated polysiloxane having a viscosity of 5,000 cP to 50,000 cP at room temperature (25°C) and a low viscosity vinyl terminated polysiloxane having a viscosity of 100 cP to 4,000 cP at room temperature (25°C).

The vinyl terminated polysiloxane may be present in an amount of 30 wt% to 80 wt%, preferably from 40 wt% to 70 wt%, based on the total weight of the siloxane resin composition.

The hydroxy terminated polysiloxane may include at least one selected from the group consisting of, for example, hydroxy terminated polydimethylsiloxane and carbinol(hydroxyl) terminated polydimethylsiloxane, without being limited thereto.

The siloxane resin composition may include two or more types of hydroxy terminated polysiloxane, preferably two or more types of hydroxy terminated polysiloxane having different viscosities, more preferably a high viscosity hydroxy terminated polysiloxane having a viscosity of 400 cP to 4,000 cP at room temperature (25°C) and a low viscosity hydroxy terminated polysiloxane having a viscosity of 5 cP to 200 cP at room temperature (25°C).

The hydroxy terminated polysiloxane may be present in an amount of 10 wt% to 50 wt%, preferably 20 wt% to 40 wt%, based on the total weight of the siloxane resin composition.

The hydrogen-containing polysiloxane may include at least one selected from the group consisting of, for example, polymethylhydrosiloxane, polyethylhydrosiloxane, methylhydrosiloxane-methylphenylsiloxane copolymer, and methylhydrosiloxane-dimethylsiloxane copolymer, without being limited thereto.

The hydrogen-containing polysiloxane may have a viscosity of 5 cP to 2,000 cP, preferably 50 cP to 1,000 cP, at room temperature (25°C).

The hydrogen-containing polysiloxane may be present in an amount of 1 wt% to 20 wt%, preferably 3 wt% to 10 wt%, based on the total weight of the siloxane resin composition.

The MQ silicone resin is an organosilicon polymer prepared from structural units referred to as M units represented by Formula (R)₃SiO_{1/2} and structural units referred to as Q units represented by the formula SiO_{4/2}, where R represents hydrogen, an aliphatic hydrocarbon group, or an aromatic hydrocarbon group.

Specifically, the MQ silicone resin may include, for example, a methyl MQ silicone resin, a vinyl methyl MQ silicone resin, a methyl hydrogen MQ silicone resin, a methyl phenyl MQ silicone resin, a vinyl MQ silicone resin, and a phenyl MQ silicone resin, without being limited thereto.

The MQ silicone resin may have a weight average molecular weight (Mw) of 500 g/mol to 20,000 g/mol, preferably 800 g/mol to 5,000 g/mol.

The MQ silicone resin may be present in an amount of 1 wt% to 15 wt%, preferably 5 wt% to 10 wt%, based on the total weight of the siloxane resin composition.

In one embodiment, the siloxane resin composition may further include at least one selected from the group consisting of an organic solvent, a curing retarder, and a catalyst.

The organic solvent may include hydrocarbons, such as xylene, benzene, toluene, and the like; alcohols, such as methanol, ethanol, isopropanol, and the like; ketones, such as acetone, methyl ethyl ketone, and the like; fatty acid esters, such as methyl acetate, ethyl acetate, butyl acetate, and the like; and ethers, such as methyl ether, ethyl ether, tetrahydrofuran, dioxane, and the like, preferably alcohols, more preferably ethanol, without being limited thereto.

The curing retarder may be used to prevent curing through agglomeration of the components during the manufacturing process and distribution. The curing retarder may include, for example, 1-ethylcyclohexanol, 1-methylcyclohexanol, 1-ethynyl-1-cyclohexanol, and 1-phenyl-1-cyclohexanol, without being limited thereto.

The catalyst promotes thermal curing and foaming reaction of silicone, and may include a platinum catalyst. The platinum catalyst may include, for example, O[Si(CH₃)₂CH=CH₂]₂Pt, Pt(NH₃)₂(NO₂)₂, (CH₃C₅H₄)Pt(CH₃)₃, and Pt(CH₃)₂(C₂H₃N₂), without being limited thereto.

In one embodiment, the silicone foam-forming composition may further include flame retardant particles to further improve fire resistance and heat resistance of the silicone foam.

The flame retardant particles may include at least one selected from the group consisting of aluminum hydroxide (Al(OH)₃), magnesium hydroxide (Mg(OH)₂), calcium carbonate (CaCO₃), aluminum hydroxide oxide (AlO(OH)), nanoalumina (Al₂O₃), antimony oxide (Sb₂O₃), zinc borate, and melamine flame retardants, preferably aluminum hydroxide (Al(OH)₃).

The flame retardant particles may be present in an amount of 3 wt% to 25 wt%, preferably 5 wt% to 20 wt%, based on the total weight of the silicone foam-forming composition.

### Refractory layer

The composite pad for batteries according to the present invention may further include a refractory layer 200 on the silicone foam 100.

FIG. 1 is a view of a laminate structure of a composite pad for batteries according to one embodiment of the invention. Referring to FIG. 1, the composite pad for batteries further including a refractory layer may include a first refractory layer 200-1; a second refractory layer 200-2 opposite the first refractory layer; and a silicone foam 100 interposed between the first and second refractory layers.

The refractory layer may include at least one selected from the group consisting of mica, silica-based fiber, glass fiber, and carbon fiber.

Mica exhibits good properties in terms of fire resistance, heat resistance, high temperature resistance, and electrical insulation characteristics, and thus can act as an insulating refractory layer without burning in a flame or high heat.

The silica-based fiber mainly consists of silica (SiO₂), has good heat resistance at high temperature and low thermal conductivity, and can act as a thermally insulating refractory layer.

The carbon fiber is composed of long molecular chains where carbon atoms form a crystalline structure, exhibits good heat resistance at high temperature and a low coefficient of thermal expansion, and can act as a refractory layer.

In one embodiment, the refractory layer may have a thickness of 50 µm to 500 µm, preferably 80 µm to 300 µm, more preferably 100 µm to 200 µm. Within this range of the thickness, the refractory layer can further improve the refractory properties while maintaining suitable surface pressure characteristics.

In one embodiment, the composite pad for batteries including the refractory layer may have a thermal conductivity of 0.2 W/mK or less, preferably 0.05 W/mK to 0.2 W/mK, more preferably 0.1 W/mK to 0.15 W/mK, as measured at 23°C by the ASTM D5470 method.

### Adhesive layer

The composite pad for batteries according to the present invention may further include an adhesive layer between the silicone foam 100 and the refractory layer 200.

In one embodiment, the composite pad for batteries further including the adhesive layer may include: a first refractory layer; a first adhesive layer formed on the first refractory layer; a second refractory layer opposite the first refractory layer; a second adhesive layer formed on the second refractory layer and opposite the first adhesive layer; and a silicone foam interposed between the first adhesive layer and the second adhesive layer.

The adhesive layer may have a thickness of 1 µm to 300 µm, preferably 10 µm to 200 µm, more preferably 50 µm to 150 µm, to minimize the thickness of the composite pad for batteries while ensuring sufficient adhesion.

The adhesive layer may be formed of any bonding agent that is currently used or will be developed in the art, for example, a thermosetting bonding agent. The thermosetting bonding agent may be formed of an adhesive composition including at least one selected from the group consisting of a thermosetting resin, a thermoplastic resin, a curing agent, and inorganic fillers.

### <Battery module and battery pack>

The present invention provides a battery module including: a plurality of battery cells; and a composite pad for batteries interposed between the plurality of battery cells. Further, the present invention provides a battery pack including the battery module.

The battery module and the battery pack may be applied to various fields, such as various mobile devices, electric vehicles (EVs), hybrid vehicles (HEVs), energy storage systems (ESSs), and the like.

Next, examples of the present invention will be described in detail along with comparative examples. However, it should be understood that the present invention is not limited to the following examples.

### <Example>

### Preparative Example: Preparation of siloxane resin composition

A siloxane resin composition was prepared according to the components and contents, as listed in Table 1.

**Table 1**

| Component | Content (wt%) |
|---|---|
| Vinyl terminated polydimethylsiloxane (viscosity: 1,000 cP) | 25.477 |
| Vinyl terminated polydimethylsiloxane (viscosity: 20,000 cP) | 29.0 |
| Vinyl methyl MQ silicone resin (Mw: 2,400 g/mol) | 8.0 |
| Polymethylhydrogensiloxane (Viscosity: 300 cP) | 4.5 |
| Hydroxy terminated polydimethylsiloxane (viscosity: 1,000 cP) | 14.0 |
| Hydroxy terminated polydimethylsiloxane (viscosity: 40 cP) | 18.0 |
| Organic solvent (ethanol) | 1.0 |
| Pt catalyst (O[Si(CH₃)₂CH=CH2]₂Pt, Merck) | 0.003 |
| Curing retarder (1-ethynyl-1-cyclohexanol) | 0.02 |

### Examples 1 to 6 and Comparative Examples 1 to 5

### (1) Preparation of Silicone foam-forming composition

In Examples and Comparative Examples, compositions for silicone foam were prepared according to the ingredients and contents, as listed in Table 2.

**Table 2**

| (Unit: wt%) | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| Siloxane resin composition | A-1 | 80 | 73 | 80 | 73 | 80 | 73 | 88 | 80 | 80 | 80 | 80 |
| Silica aerogel particles | B-1 | 8 | 15 | - | - | - | - | - | - | - | - | - |
| | B-2 | - | - | 8 | 15 | - | - | - | - | - | - | - |
| | B-3 | - | - | - | - | 8 | 15 | - | - | - | - | - |
| | b-1 | - | - | - | - | - | - | - | 8 | - | - | - |
| | b-2 | - | - | - | - | - | - | - | - | 8 | - | - |
| | b-3 | - | - | - | - | - | - | - | - | - | 8 | - |
| | b-4 | - | - | - | - | - | - | - | - | - | - | 8 |
| Flame retardant particles | C-1 | 12 | 12 | 12 | 12 | 12 | 12 | 12 | 12 | 12 | 12 | 12 |

| | | | | | | | | | | | | |
|---|---|---|---|---|---|---|---|---|---|---|---|---|
| A-1: Siloxane resin composition prepared in Preparative Example B-1: Silica aerogel particle 1 (surface treated with methyltriethoxysilane; D50: 9.7 µm; BET: 500 m²/g) B-2: Silica aerogel particle 2 (surface treated with methyltriethoxysilane; D50: 37.0 µm; BET: 1,000 m²/g) B-3: Silica aerogel particle 3 (surface treated with hexamethyldisilazane; D50: 21.1 µm; BET: 300 m²/g) b-1: Silica aerogel particle 4 (surface treated with methyltriethoxysilane; D50: 63.0 µm; BET: 800 m²/g) b-2: Silica aerogel particle 5 (surface treated with hexamethyldisilazane; D50: 4.3 µm; BET: 180 m²/g) b-3: Silica aerogel particle 6 (no surface treatment; D50: 11.2 µm; BET: 500 m²/g) b-4: Silica aerogel particle 7 (no surface treatment; D50: 28.9 µm; BET: 500 m²/g) C-1: Aluminum hydroxide (Al(OH)₃; diameter: 5 µm) | | | | | | | | | | | | |

### (2) Preparation of silicone foam

Each of the compositions for silicone foam prepared in Examples and Comparative Examples was deposited between two sheets of fluorine release-treated PET films (thickness: 100 µm), passed through a gap coater to have a certain thickness, and placed in a hot air oven to perform foaming reaction by heating at 120°C for 10 minutes. Then, the resulting product was cooled at room temperature and the PET films on both sides were peeled off, thereby preparing a silicone foam having a thickness of 3 mm.

### (3) Preparation of composite pad for batteries

Each of the compositions for silicone foam prepared in Examples and Comparative Examples was deposited between two sheets of mica films (thickness: 200 µm), passed through a gap coater to have a certain thickness, and placed in a hot air oven to perform foaming reaction by heating at 120°C for 10 minutes, thereby forming a silicone foam between the two sheets of mica films. Then, the resulting product was cooled at room temperature, thereby preparing a composite pad for batteries having a thickness of 3.4 mm.

### <Experimental example>

### 1. Evaluation of physical properties of silicone foam

For the silicone foam prepared in each of Examples and Comparative Examples, tensile strength and elongation were measured at room temperature (25°C) under normal pressure using a material tester (AGX V2, UTM Shimadzu) as specified in ASTM D412. Results are shown in Table 3.

### 2. Measurement of average pore diameter of silicone foam

After cutting the silicone foam prepared in each of Examples and Comparative Examples in the thickness direction, a cut surface was photographed using a shape measuring laser microscope (VK-X1100, KEYENCE) at 20x to 200x magnification. The major axis lengths from the largest pore to the 15th largest pore in a certain range on the obtained image were measured, and an average value of the major axis lengths was taken as an average pore diameter. Results are shown in Table 3.

**Table 3**

| | Example | | | | | | Comparative Example | | | | |
|---|---|---|---|---|---|---|---|---|---|---|---|
| | 1 | 2 | 3 | 4 | 5 | 6 | 1 | 2 | 3 | 4 | 5 |
| Tensile strength (kPa) | 476 | 254 | 432 | 218 | 435 | 244 | 198 | 123 | 126 | 180 | 139 |
| Elongation (%) | 232 | 93 | 195 | 75 | 236 | 107 | 150 | 136 | 146 | 155 | 87 |
| Average pore diameter (µm) | 627 | 321 | 389 | 169 | 538 | 297 | 2,268 | 159 | 1,421 | 830 | 982 |

Referring to Table 3, it could be seen that the silicone foams of Examples 1 to 6 exhibited similar elongation to the silicone foams of Comparative Examples 1 to 5, and had a tensile strength of 218 kPa or more, which is much higher than those of Comparative Examples. In particular, the silicone foams of Examples 1 to 6 had higher tensile strength than the silicone foam of Comparative Example 1, which was prepared without silica aerogel particles. This result is attributed to improved compatibility with the silicone foam, achieved by incorporating silica aerogel particles within a specific range of average particle diameter (D₅₀) and specific surface area (BET).

On the other hand, it could be seen that the silicone foams of Comparative Examples 2 and 3 using silica aerogel particles having too small or too large an average particle diameter (D50) and specific surface area (BET), and the silicone foams of Comparative Examples 4 and 5 using silica aerogel particles subjected to no hydrophobic surface treatment had lower tensile strength than the silicone foam of Comparative Example 1. This result is attributed to poor compatibility with the silicone foam.

### 3. Evaluation of thermal conductivity of composite pad for batteries

For each of the composite pads for batteries prepared in Examples and Comparative examples, thermal conductivity at 23°C was measured using a thermal conductivity meter (TCM-100, SEO) according to ASTM D5470, and the results are shown in Table 4.

### 4. Evaluation of flame retardancy of composite pads for batteries

For each of the composite pads for batteries prepared in Examples and Comparative examples, combustion behavior was checked according to ASTM D3801 and evaluated according to the following UL94 standard, and the results are shown in Table 4.

### <Flame Retardant Evaluation Criteria - UL94 Standard>

- V0: Burning time of each specimen is 10 seconds or less; burning time of 5 specimens is 50 seconds or less; burning and glowing time of each specimen is 30 seconds or less; no burning to the clamp side specimen; no cotton ignition due to flaming drips.

### 5. Evaluation of thermal insulation performance of composite pads for batteries

Thermal insulation performance was evaluated for each of the composite pads for batteries prepared in Examples and Comparative examples. Specifically, for evaluation of the thermal insulation performance, one side of the composite pad for batteries was attached to a hot plate at 600°C, followed by pressing the composite pad under a load of 100 kPa while measuring the time until the temperature of an opposite side to the side of the composite pad attached to the hot plate reached 200°C, and the results are shown in Table 4.

**Table 4**

| | Example | | | | | | Comparative Example | | | | |
|---|---|---|---|---|---|---|---|---|---|---|---|
| | 1 | 2 | 3 | 4 | 5 | 6 | 1 | 2 | 3 | 4 | 5 |
| Thermal conductivity (W/mK, 23°C) | 0.15 | 0.11 | 0.11 | 0.10 | 0.12 | 0.10 | 0.42 | 0.28 | 0.23 | 0.24 | 0.28 |
| Flame retardancy (UL94 standard) | V0 | V0 | V0 | V0 | V0 | V0 | V0 | V0 | V0 | V0 | V0 |
| Heat insulation performance (s) | 611 | 776 | 682 | 820 | 589 | 749 | 385 | 497 | 418 | 474 | 461 |

Referring to Table 4, it could be seen that, although the composite pads of Examples 1 to 6 had flame retardancy results similar to those of Comparative Examples 1 to 5, the composite pads of Examples 1 to 6 had a lower thermal conductivity of 0.15 W/mK or less at 23°C than those of Comparative Examples, and achieved significant improvement in heat diffusion delay time, thereby providing improved thermal insulation performance.

On the other hand, the composite pad of Comparative Example 1, prepared without incorporating the silica aerogel particles in the silicone foam, exhibited the highest thermal conductivity and the lowest thermal insulation performance.

In addition, it could be seen that the composite pads of Comparative Examples 2 and 3 prepared using silica aerogel particles with too small or too large an average particle diameter (D50) and specific surface area (BET), and the composite pads of Comparative Examples 4 and 5 prepared using silica aerogel particles subjected to no hydrophobic surface treatment had slightly lower thermal conductivity and slightly better thermal insulation performance than the composite pad of Comparative Example 1.

## Claims

1. A composite pad for batteries, comprising: a silicone foam (100) having surface pressure characteristics,
wherein the silicone foam (100) has an average pore diameter of 100 µm to 2,000 µm and comprises silica aerogel particles subjected to hydrophobic surface treatment,
the silica aerogel particles having an average particle diameter (D50) of 5 µm to 50 µm and a specific surface area (BET) of 250 m²/g or more.

2. The composite pad for batteries according to claim 1, further comprising: a refractory layer (200-1, 200-2).

3. The composite pad for batteries according to any one of claims 1 and 2, wherein the silicone foam (100) has a thickness of 1 mm to 5 mm.

4. The composite pad for batteries according to any one of claims 1 to 3, wherein the silicone foam (100) comprises a cured foam product of a silicone foam-forming composition.

5. The composite pad for batteries according to claim 4, wherein the silicone foam-forming composition comprises a siloxane resin composition.

6. The composite pad for batteries according to claim 2, wherein the refractory layer (200-1, 200-2) comprises at least one selected from the group consisting of mica, silica-based fiber, glass fiber, and carbon fiber.

7. The composite pad for batteries according to any one of claims 2 and 6, further comprising: a adhesive layer between the silicone foam (100) and the refractory layer (200-1, 200-2).

8. The composite pad for batteries according to any one of claims 1 to 7, wherein the silicone foam has a tensile strength of 200 kPa or more, as measured by the ASTM D412 method.
